(19)

**Europäisches Patentamt**
**European Patent Office**
**Office européen des brevets**

(11) **EP 2 321 796 B1**

(12) **EUROPEAN PATENT SPECIFICATION**

(45) Date of publication and mention
of the grant of the patent:
**28.12.2016 Bulletin 2016/52**

(21) Application number: **08795175.2**

(22) Date of filing: **08.08.2008**

(51) Int Cl.:
*G06T 7/00* (2006.01)       *G06T 5/00* (2006.01)
*H04N 19/85* (2014.01)

(86) International application number:
**PCT/US2008/009566**

(87) International publication number:
**WO 2010/016823 (11.02.2010 Gazette 2010/06)**

(54) **METHOD AND APPARATUS FOR DETECTING DARK NOISE ARTIFACTS**

VERFAHREN UND VORRICHTUNG ZUM DETEKTIEREN VON DUNKELRAUSCHARTEFAKTEN

PROCÉDÉ ET APPAREIL DE DÉTECTION D'ARTÉFACTS DE BRUIT D'OBSCURITÉ

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**18.05.2011 Bulletin 2011/20**

(73) Proprietor: **Thomson Licensing
92130 Issy-les-Moulineaux (FR)**

(72) Inventors:
• **ABBAS, Adeel
Plainsboro
New Jersey 08536 (US)**
• **LI, Zhen
Burbank
California 91505 (US)**
• **LU, Xiaoan
Princeton
New Jersey 08540 (US)**

• **GOMILA, Christina
Princeton
New Jersey 08540 (US)**

(74) Representative: **Esselin, Sophie et al
Marks & Clerk France
Conseils en Propriété Industrielle
Immeuble Visium
22 avenue Aristide Briand
94117 Arcueil Cedex (FR)**

(56) References cited:
**WO-A1-2008/088482       WO-A2-2008/085425
US-A1- 2008 123 989**

• **GABBOUJ M ET AL: "AN OVERVIEW OF MEDIAN
AND STACK FILTERING" CIRCUITS, SYSTEMS
AND SIGNAL PROCESSING, CAMBRIDGE, MS,
US, vol. 11, no. 1, 1 January 1992 (1992-01-01),
pages 7-45, XP000613176 ISSN: 0278-081X**

EP 2 321 796 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

Principles of the present invention relate to digital image and video content. More particularly, they relate to detecting dark noise artifacts in digital image and video content.

Description of the related art

Non-real time video coding applications such as DVD authoring, aim at achieving the best possible visual quality for an image from a compression engine. To that goal, compressionists (i.e., the technicians responsible for the compression process) are required to review the compressed video in order to identify pictures with artifacts. This is a manual and subjective process that requires substantial experience, time and effort affecting the production time and budget. It is also subject to inconsistency due to different visual evaluation standards imposed by different evaluators. In common practice, detected pictures are post-processed or re-encoded with fine-tuned encoding parameters and subject to further review. The post-processing or re-encoding algorithms can tune their parameters based on the artifact parameter and locations in order to get better picture quality.

In this context, automatic artifact detection is needed to facilitate the process. In order to automatically identify a problematic scene or segment, it is essential to find objective metrics that detect the presence of compression artifacts. Detection of common compression artifacts caused by MPEG-2 encoding, such as blockiness, blurriness and mosquito noise, has been extensively studied in the past. However, this is a difficult problem not properly handled by conventional and widely-accepted objective metrics such as the Peak Signal-to-Noise-Ratio (PSNR). Furthermore, the use of new compression standards such as MPEG-1 AVC or VC-I jointly with the fact that the new High Definition DVD formats operate at higher bit-rates has brought into play new types of compression artifacts.

The therm dark noise describes a particular type of visual artifact introduced by these new compression systems. A compressed image is said to have dark noise artifacts when clusters of artificially flattened blocks are perceived in areas that exhibit (1) low variance, (2) low intensity level and (3) low saturation. Dark noise artifacts may include severe blockiness and/or variations on the perceived chroma pattern.

To efficiently support the applications described above, a dark noise artifact detection algorithm needs to provide a parameter that represents the severity of the artifact such that re-encoding and post-processing algorithm could automatically prioritize the allocation of resources within the project constraints. Furthermore, a dark noise artifact detection algorithm needs to provide the parameter not only on a global level such as a group of pictures or one picture, but also on a local level such as a macroblock or block inside a picture. By locating the dark noise artifact to the local level, an encoding or processing module can adjust the encoding or processing parameters in the artifact areas only, which can be particularly useful when the overall bit budgets or computational resources are limited.

Consequently, there is a strong need for a method and apparatus that automatically detects dark noise artifacts and determines the strength of the artifact per block and per picture.

For instance WO2008/088482 discloses the use of artifact metrics and artifact maps for prioritizing videoframes to be corrected according to the type and severity of the artifacts and to the content of the videoframes.

## SUMMARY

The present invention is defined by the appended claims. In brief, the invention relates to a method and apparatus for dark noise artifacts in coded images and video. The method: (i) finds the locations of the artifacts in the compressed pictures, (ii) determines the strength of the artifact per block, and (iii) determines overall dark noise artifact strength for each picture. Artifact detection and parameter assignment is performed by analyzing candidate areas that could be prone to this type of artifact. Multiple features such as block variance, color information, luminance levels and location of the artifact could be used in this process. As claimed in claim 1, a method for detecting dark noise artifacts is proposed comprising the steps of screening candidate dark noise artifact areas in a digital image based on at least one feature of the area, filtering the screened candidate areas to eliminate isolated artifact areas, assigning a dark noise artifact parameter to each candidate area, and forming a dark noise artifact parameter for a set of pixels in the candidate area.

The present invention also relates to a video encoder comprising a dark noise artifact detector configured to screen candidate dark noise artifacts areas of a digital image based on at least one feature of the area, eliminate isolated artifact areas, assign a dark noise artifact strength to each candidate area, and calculate a dark noise artifact parameter for a set of pixels.

The present invention will become apparent from the following detailed description considered in conjunction with the accompanying drawings. It is to be understood, however, that the drawings are designed solely for purposes of illustration and not as a definition of the limits of the present invention, for which reference should be made to the appended claims. It should be further understood that the drawings are not necessarily drawn to scale and that, unless otherwise indicated, they are merely intended to conceptually illustrate the structures and procedures described herein.

## BRIEF DESCRIPTION OF THE DRAWINGS

In the drawings wherein like reference numerals denote similar components throughout the views:

FIG. 1 is flow diagram of the method for detecting dark noise artifacts according to an implementation of the present principles;
FIG. 2 is a detailed flow diagram of the method for detecting dark noise artifacts according to an implementation of the present principles;
FIG. 3 is a block diagram of a rate control algorithm that could apply the method for dark noise artifact detection according to an implementation of the present principles; and
FIG. 4 is a block diagram of a predictive encoder incorporating the method for dark noise artifact detection according to an implementation of the present principles.

## DETAILED DESCRIPTION

The present principles proposes a method and an apparatus to (i) find the locations of the dark noise artifacts, (ii) determine the strength of the dark noise artifact per block, and (iii) determine overall dark noise artifact strength per picture.

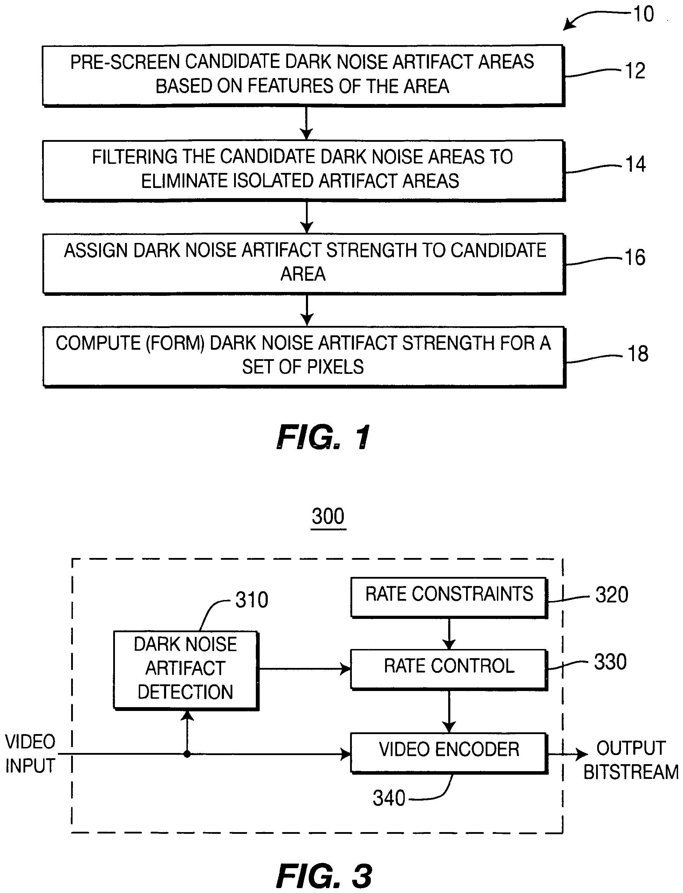

Dark noise artifact detection described by the present principles can include part or all of the following steps. Referring to the method 10 shown in FIG. 1, the dark artifact detection is performed by first screening (12) the targeted picture or pictures and locating the candidate dark noise artifact areas. A filter is applied (14) on these candidates to eliminate the isolated areas. At this point, a dark noise artifact strength is assigned (16) to each candidate artifact block, which can be further used to determine or form (18) the artifact strength for a set of pixels (e.g., a picture or a group of pictures). The strength value can then be compared against a threshold automatically by the video encoder, or the metric can be presented to a compressionist who will determined the need for re-encoding on an individual case basis. We explain these steps in the following.

### (a) Dark noise artifact area screening

The screening of step 12 in Figure 1 is used to attempt to eliminate the areas where typical dark noise artifacts are unlikely to occur and hence speed-up the dark noise artifact detection. The screening step and filtering steps eliminate or reduce dark noise artifacts within the areas. The prescreening can be done on a pixel level or a group of pixels level. A number of features in the pixel domain or the transform domain can be used to eliminate unlikely candidates. As an exemplary implementation, the following features are computed on an 8x8 block,

MeanLumRec = Mean of the luma component of the reconstructed block
MeanCbRec = Mean of the Cb chroma component of the reconstructed block
MeanCrRec = Mean of the Cr chroma component of the reconstructed block
VarLumRec = Variance of the luma component of the reconstructed block
VarLumOrg = Variance of the luma component of the original block

Where the variance $\tilde{B}$ of the pixel values in a block $B$ of size MxN is computed as

$$\tilde{B} = \frac{1}{M\,x\,N} \sum_{i=1}^{M} \sum_{j=1}^{N} \left( B(i,j) - \bar{B} \right)^2$$

$B(i,j)$ represents the pixel value at position (i,j) in the block $B$, and $\bar{B}$ represents the mean of the pixel values within the block $B$ and it is computed as

$$\bar{B} = \frac{1}{M\,x\,N} \sum_{i=1}^{M} \sum_{j=1}^{N} B(i,j)$$

In this example, a block that satisfies the following criteria is classified as a candidate dark noise artifact area.

A block that is classified as candidate dark noise artifact area is marked as 1, otherwise it is marked as 0.

1) MeanLumRec is in a pre-determined range TH_LUM_LOW, TH_LUM_HI) ;
2) VarLumRec is less than a predetermined value TH_LUM_VAR;
3) The absolute value of the difference between VarLumOrg and VarLumRec is greater than a pre-determined value TH_LUM VARDI FF;
4) MeanCbRec and MeanCrRec are within the rage (TH_CR_LOW, TH_CB_HI) and (TH_CR_LOW, TH_CR_HI), respectively.

As mentioned above, other criteria (i.e., other than luminance information) can be used during the screening step. Other examples of area features that can be used to screen candidate dark noise artifact areas can include spatial activity information, texture information, or temporal information.

**(b) Candidate dark noise artifact areas filtering**

Once the candidate dark noise artifact areas are identified, a temporal and/or spatial filter (step 14) can be used on these areas to reduce or eliminate the isolated regions. In the exemplary implementation, we use a spatial median filter to filter out the isolated candidate dark noise artifact macroblocks inside a video frame.

**(c) Dark noise artifact strength for a block**

Based on the characteristics of a candidate dark noise artifact block, artifact strength can be assigned to this block. In the present example, we assign higher strength to blocks with lower average luminance values. This is due to the fact that the artifacts tend to be more severe in low luminance areas. If the original image or video is available, we can further compute the variance of each block for both the original and reconstructed image or video, and the candidate reconstructed block with greater decrease in variance is assigned with higher artifact strength. As a particular embodiment, the artifact strength for a block (ArtifactStrength) can be computed as follows,

$$\texttt{VarDiff = VarLumOrg - VarLumRec}$$

$$\texttt{LumaWt = (TH\_LUM\_HI - MeanLumRec) / (TH\_LUM\_HI - TH\_LUM\_LOW)}$$

$$\texttt{ArtifactStrength = VarDiff + LumaWt}$$

Those of skill in the art will recognize that the artifact strength can be assigned on a macroblock level or on a picture level.

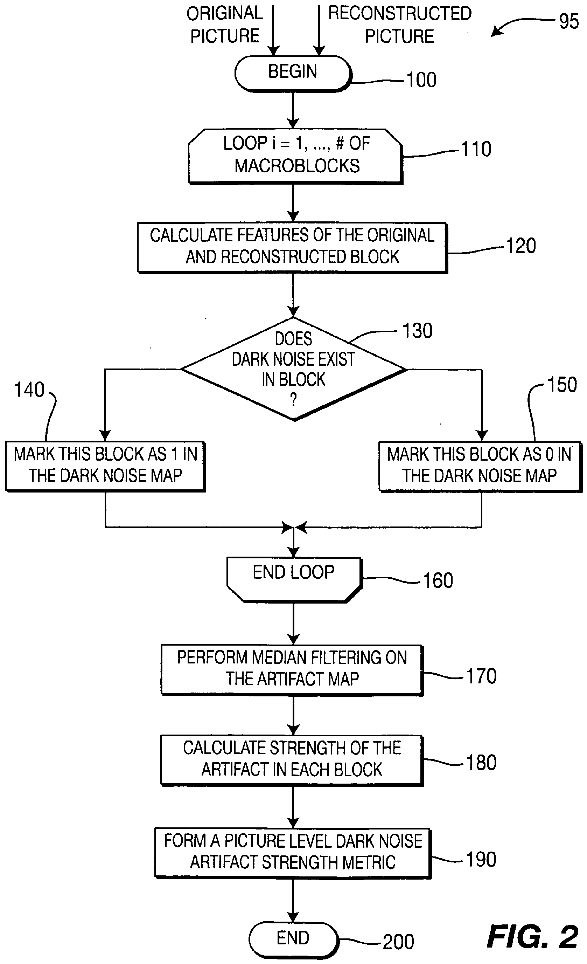

FIG. 2 illustrates a flow diagram 95 of a block level dark noise artifact detection module according to an implementation of the present principles. As mentioned above, for each block in a picture, the dark noise artifact detection method first screens and eliminates the unlikely artifact candidate areas using different features. This is shown by steps 100-120 of Figure 2. Initially when the process begins (100), a loop through the macroblocks is performed (110), and features of the original and reconstructed blocks are calculated (120).

A determination is then made (130) as to whether dark noise exists in the respective block. When yes, the detected dark noise artifact candidate is marked as 1 in the mask map (140), otherwise marked as 0 (150). At this point the loop through the macroblocks is ended (160).

The median filtering is then performed on the mask map to eliminate the isolated areas (170). After the median filtering, dark noise artifact strength for a group of pixels such as a block can be calculated (180). Based on the strength calculation, the artifact strength for a picture can be formed (190), and the process then ends (200).

**(d) Dark noise artifact metric for an image or a group of video pictures**

Once the candidate artifact blocks are identified and artifact strength is assigned to each block, the overall dark noise artifact strength can be computed (or formed) for an image or a group of video pictures (step 18). An example of computing the overall dark noise artifact strength is to use the percentage of blocks that are identified as candidate artifact blocks inside the image or video pictures. Another example of computing the overall artifact strength can be summing up the artifact strength for every block. The overall artifact strength can then be compared against a threshold automatically by the video encoder, or the metric can be presented to a compressionist who will determined the need for re-encoding on an individual case basis.

For areas or pictures that are identified with dark noise artifacts exceeding the desired threshold, a rate control algorithm can be used to adjust the encoding parameters for re-encoding. A simple example of such rate control is to allocate more bits to areas or pictures with dark noise artifacts using bits from areas or pictures without dark noise artifacts (see, for example, Figure 3).

FIG. 3 illustrates the block diagram of a rate control algorithm 300 that could apply the dark noise artifact detection method 10 shown and described in Figures 1-2. Turning to FIG. 3, an exemplary apparatus for rate control to which the present principles may be applied is indicated generally by the reference numeral 300. The apparatus 300 is configured to apply dark noise artifact parameters estimation described herein in accordance with various embodiments of the present principles. The apparatus 300 comprises a dark noise artifact detector 310, a rate constraint memory 320, a rate controller 330, and a video encoder 340.

An output of the dark noise artifact detector 310 is connected in signal communication with a first input of the rate controller 330. The rate constraint memory 320 is connected in signal communications with a second input of the rate controller 330. An output of the rate controller 330 is connected in signal communication with a first input of the video encoder 340.

An input of the dark noise artifact detector 310 and a second input of the video encoder 340 are available as inputs of the apparatus 300, for receiving input video and/or image(s). An output of the video encoder 340 is available as an output of the apparatus 300, for outputting a bitstream.

In one exemplary embodiment, the dark noise artifact detector 310 generates a dark noise artifact parameter according to the methods described according to Figs. 1-2 and passes said metric to the rate controller 330. The rate controller 330 uses this dark noise artifact parameter along with additional rate constraints stored in the rate constraint memory 320 to generate a rate control parameter for controlling the video encoder 340. Alternatively, the artifact parameter can be stored in a memory, where said dark noise artifact parameter can later be retrieved and a decision can be made as to when re-encoding is required or not.

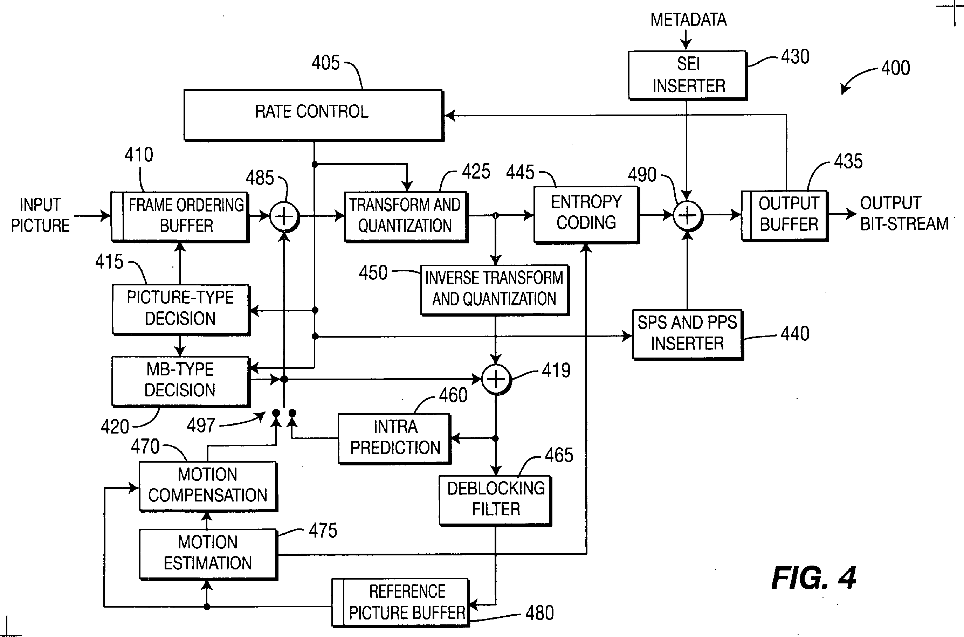

Turning to FIG. 4, an exemplary predictive video encoder to which the present principles may be applied is indicated generally by the reference numeral 400 that could apply the rate control algorithm in FIG. 3 with an integrated dark noise artifact detection module 495 implementing the dark noise artifact detection method of the present principles. The encoder 300 may be used, for example, as the encoder 340 in FIG. 3. In such a case, the encoder 400 is configured to apply the rate control (as per the rate controller 330) corresponding to the apparatus 300 of FIG. 3.

The video encoder 400 includes a frame ordering buffer 410 having an output in signal communication with a first input of a combiner 485. An output of the combiner 485 is connected in signal communication with a first input of a transformer and quantizer 425. An output of the transformer and quantizer 425 is connected in signal communication with a first input of an entropy coder 445 and an input of an inverse transformer and inverse quantizer 450. An output of the entropy coder 445 is connected in signal communication with a first input of a combiner 490. An output of the combiner 490 is connected in signal communication with an input of an output buffer 435. A first output of the output buffer is connected in signal communication with an input of the rate controller 405. An output of a rate controller 405 is connected in signal communication with an input of a picture-type decision module 415, a first input of a macroblock-type (MB-type) decision module 420, a second input of the transformer and quantizer 425, and an input of a Sequence Parameter Set (SPS) and Picture Parameter Set (PPS) inserter 440.

A first output of the picture-type decision module 415 is connected in signal communication with a second input of a frame ordering buffer 410. A second output of the picture-type decision module 415 is connected in signal communication with a second input of a macroblock-type decision module 420.

An output of the Sequence Parameter Set (SPS) and Picture Parameter Set (PPS) inserter 440 is connected in signal communication with a third input of the combiner 490. An output of the inverse quantizer and inverse transformer 450 is connected in signal communication with a first input of a combiner 427. An output of the combiner 427 is connected in signal communication with an input of an intra prediction module 460 and an input of the deblocking filter 465. An output of the deblocking filter 465 is connected in signal communication with an input of a reference picture buffer 480. An output of the reference picture buffer 480 is connected in signal communication with an input of the motion estimator 475 and a first input of a motion compensator 470. A first output of the motion estimator 475 is connected in signal communication with a second input of the motion compensator 470. A second output of the motion estimator 475 is connected in signal communication with a second input of the entropy coder 445.

An output of the motion compensator 470 is connected in signal communication with a first input of a switch 497. An output of the intra prediction module 460 is connected in signal communication with a second input of the switch 497. An output of the macroblock-type decision module 420 is connected in signal communication with a third input of the switch 497. An output of the switch 497 is connected in signal communication with a second input of the combiner 427.

An input of the frame ordering buffer 410 is available as input of the encoder 400, for receiving an input picture. Moreover, an input of the Supplemental Enhancement Information (SEI) inserter 430 is available as an input of the encoder 400, for receiving metadata. A second output of the output buffer 435 is available as an output of the encoder 400, for outputting a bitstream.

Additionally, the methods may be implemented by instructions being performed by a processor, and such instructions may be stored on a processor-readable medium such as, for example, an integrated circuit, a software carrier or other storage device such as, for example, a hard disk, a compact diskette, a random access memory ("RAM"), or a read-only memory ("ROM") The instructions may form an application program tangibly embodied on a processor-readable medium. As should be clear, a processor may include a processor-readable medium having, for example, instructions for carrying out a process.

As should be evident to one of skill in the art, implementations may also produce a signal formatted to carry information that may be, for example, stored or transmitted. The information may include, for example, instructions for performing a method, or data produced by one of the described implementations. Such a signal may be formatted, for example, as an electromagnetic wave (for example, using a radio frequency portion of spectrum) or as a baseband signal. The formatting may include, for example, encoding a data stream, packetizing the encoded stream, and modulating a carrier with the packetized stream. The information that the signal carries may be, for example, analog or digital information. The signal may be transmitted over a variety of different wired or wireless links, as is known.

A number of implementations have been described. Nevertheless, it will be understood that various modifications may be made as long as they are within the scope of the following claims.

### Claims

1. A method r of detecting compression artifacts in a digital image, the method comprising the steps of:

   screening (12) said digtial image to detect at least one candidate dark noise artifact area, wherein each candidate dark noise artifact area is detected by satisfying that:

   the mean luminance of said area lies within a first predetermined range,
   the variance of luminance of said area is less than a predetermined value, and the respective means of the chrominance components of said area lie within respective predetermined ranges; and of
   filtering (14) to eliminate any isolated candidate dark noise artifact areas within the digital image;
   subsequently assigning (16) a dark noise artifact parameter to each candidate dark noise artifact area to represent the severity of the dark noise artifact r in said area, wherein said dark noise artifact parameter is determined based on the average luminance value of said candidate dark noise artifact area; and
   computing (18) a dark noise artifact strength metric based on a plurality of said dark noise artifact parameters from a plurality of said candidate dark noise artifact areas.

2. The method of claim 1, wherein said assigning of a dark noise artifact parameter is performed on a macroblock level.

3. The method of claim 1, wherein said assigning of a dark noise artifact parameter is performed on a picture level.

4. The method of claim 1, wherein the dark noise artifact parameter is varied based on the difference between the variance of luminance of the original image corresponding to said digital image before compression and the variance of luminance of the digital image in which compression artifacts are detected.

5. The method of claim 1, wherein said dark noise artifact parameter is compared to a threshold and said candidate dark noise area is re-encoded in response to said dark noise artifact parameter exceeding said threshold.

6. The method of claim 1, wherein said dark noise artifact parameter is provided as a system output.

7. A video encoder comprising:

   a detector (10) r for detecting compression artifacts in a digital image, said detector being configured to screen (12) said digital image to detect at least one candidate dark noise artifact area, wherein each area is detected by satisfying that: the mean luminance of said area lies within a first predetermined range,
   the variance of luminance of said area is less than a predetermined value, and the respective means of the chrominance components of said area lie within respective predetermined ranges; and to filter (14) to eliminate all isolated candidate dark noise artifact areas within the digital image,
assign (16) a dark noise artifact parameter to each candidate dark noise artifact area to represent r the severity of r the dark noise artifact in said area, wherein said dark noise artifact parameter is determined based on the average luminance value of said candidate dark noise artifact area, and
compute (18) a dark noise artifact strength metric based on a plurality of said dark noise artifact parameters from a plurality of r said candidate dark noise artifact areas.

8. The video encoder of claim 7, wherein the encoder assigns the dark noise artifact parameter based on the difference between a variance of luminance of the original image corresponding to said digital image before compression and the variance of luminance of the digital image in which said compression artifact is detected.

9. The video encoder of claim 7, wherein the detector assigns the dark noise artifact parameter on a macroblock level.

10. The video encoder of claim 7, wherein the detector assigns the dark noise artifact parameter on a picture level.

11. The video encoder of claim 7, wherein said dark noise artifact parameter is compared to a threshold and said candidate dark noise artifact area is re-encoded in response to said dark noise artifact parameter exceeding said threshold.

12. The video encoder of claim 7, wherein said dark noise artifact parameter is provided as a system output.


**Patentansprüche**

1. Verfahren zum Detektieren von Kompressionsartefakten in einem digitalen Bild, wobei das Verfahren die folgenden Schritte umfasst:

   Durchmustern (12) des digitalen Bilds, um mindestens einen Dunkelrauschen-Artefaktgebiets-Anwärter zu detektieren, wobei jeder Dunkelrauschen-Artefaktgebiets-Anwärter dadurch detektiert wird, dass er Folgendes erfüllt:

   die mittlere Farbdichte des Gebiets liegt innerhalb eines ersten vorgegebenen Bereichs,
   die Varianz der Farbdichte des Gebiets ist kleiner als ein vorgegebener Wert und die jeweiligen Mittelwerte der Farbwertkomponenten des Gebiets liegen innerhalb jeweiliger vorgegebener Bereiche; und
   Filtern (14), um irgendwelche isolierten Dunkelrauschen-Artefaktgebiets-Anwärter innerhalb des digitalen Bilds zu beseitigen; nachfolgend Zuweisen (16) eines Dunkelrauschen-Artefaktparameters zu jedem Dunkelrauschen-Artefaktgebiets-Anwärter, um die Schwere des Dunkelrauschenartefakts in dem Gebiet zu repräsentieren, wobei der Dunkelrauschen-Artefaktparameter auf der Grundlage des durchschnittlichen Farbdichtewerts des Dunkelrauschen-Artefaktgebiets-Anwärters bestimmt wird; und
   Berechnen (18) einer Dunkelrauschen-Artefaktstärkemetrik auf der Grundlage mehrerer der Dunkelrauschen-Artefaktparameter aus mehreren der Dunkelrauschen-Artefaktgebiets-Anwärter.

2. Verfahren nach Anspruch 1, wobei das Zuweisen eines Dunkelrauschen-Artefaktparameters auf einer Makroblockebene ausgeführt wird.

3. Verfahren nach Anspruch 1, wobei das Zuweisen eines Dunkelrauschen-Artefaktparameters auf einer Bildebene ausgeführt wird.

4. Verfahren nach Anspruch 1, wobei der Dunkelrauschen-Artefaktparameter auf der Grundlage der Differenz zwischen der Varianz der Farbdichte des ursprünglichen Bilds, das dem digitalen Bild vor der Kompression entspricht, und der Varianz der Farbdichte des digitalen Bilds, in dem Kompressionsartefakte detektiert werden, geändert wird.

5. Verfahren nach Anspruch 1, wobei der Dunkelrauschen-Artefaktparameter mit einem Schwellenwert verglichen wird und wobei der Dunkelrauschen-Artefaktgebiets-Anwärter in Ansprechen darauf, dass der Dunkelrauschen-Artefaktparameter den Schwellenwert übersteigt, umcodiert wird.

6. Verfahren nach Anspruch 1, wobei der Dunkelrauschen-Artefaktparameter als eine Systemausgabe bereitgestellt wird.

7. Videocodierer, der umfasst:

einen Detektor (10) zum Detektieren von Kompressionsartefakten in einem digitalen Bild, wobei der Detektor konfiguriert ist zum:

Durchmustern (12) des digitalen Bilds, um mindestens einen Dunkelrauschen-Artefaktgebiets-Anwärter zu detektieren, wobei jedes Gebiet dadurch detektiert wird, dass es Folgendes erfüllt:

die mittlere Farbdichte des Gebiets liegt innerhalb eines ersten vorgegebenen Bereichs,
die Varianz der Farbdichte des Gebiets ist kleiner als ein vorgegebener Wert und die jeweiligen Mittelwerte der Farbwertkomponenten des Gebiets liegen innerhalb jeweiliger vorgegebener Bereiche; und Filtern (14), um alle isolierten Dunkelrauschen-Artefaktgebiets-Anwärter innerhalb des digitalen Bilds zu beseitigen;
Zuweisen (16) eines Dunkelrauschen-Artefaktparameters zu jedem Dunkelrauschen-Artefaktgebiets-Anwärter, um die Schwere des Dunkelrauschenartefakts in dem Gebiet zu repräsentieren, wobei der Dunkelrauschen-Artefaktparameter auf der Grundlage des durchschnittlichen Farbdichtewerts des Dunkelrauschen-Artefaktgebiets-Anwärters bestimmt wird; und
Berechnen (18) einer Dunkelrauschen-Artefaktstärkemetrik auf der Grundlage mehrerer der Dunkelrauschen-Artefaktparameter aus mehreren der Dunkelrauschen-Artefaktgebiets-Anwärter.

8. Videocodierer nach Anspruch 7, wobei der Codierer den Dunkelrauschen-Artefaktparameter auf der Grundlage der Differenz zwischen einer Varianz der Farbdichte des ursprünglichen Bilds, das dem digitalen Bild vor der Kompression entspricht, und der Varianz der Farbdichte des digitalen Bilds, in dem der Kompressionsartefakt detektiert wird, zuweist.

9. Videocodierer nach Anspruch 7, wobei der Detektor den Dunkelrauschen-Artefaktparameter auf einer Makroblockebene zuweist.

10. Videocodierer nach Anspruch 7, wobei der Detektor den Dunkelrauschen-Artefaktparameter auf eine Bildebene zuweist.

11. Videocodierer nach Anspruch 7, wobei der Dunkelrauschen-Artefaktparameter mit einem Schwellenwert verglichen wird und wobei der Dunkelrauschen-Artefaktgebiets-Anwärter in Ansprechen darauf, dass der Dunkelrauschen-Artefaktparameter den Schwellenwert übersteigt, umcodiert wird.

12. Videocodierer nach Anspruch 7, wobei der Dunkelrauschen-Artefaktparameter als eine Systemausgabe bereitgestellt wird.

**Revendications**

1. Procédé de détection d'artéfacts de compression dans une image numérique, le procédé comprenant les étapes suivantes :

analyse (12) de ladite image numérique pour détecter au moins une zone d'artéfacts de bruit d'obscurité candidate, où chaque zone d'artéfacts de bruit d'obscurité candidate est détectée lorsque les conditions suivantes sont satisfaites :

la luminance moyenne de ladite zone se trouve dans une première plage prédéterminée,
la variance de luminance de ladite zone est inférieure à une valeur prédéterminée et les moyennes respectives des composantes de chrominance de ladite zone se trouvent dans des plages prédéterminées respectives, et filtrage (14) pour éliminer les zones d'artéfacts de bruit d'obscurité candidates isolées dans l'image numérique ; puis attribution (16) d'un paramètre d'artefact de bruit d'obscurité à chaque artéfact de bruit d'obscurité candidat de ladite zone, où ledit paramètre d'artéfact de bruit d'obscurité est déterminé à partir de la valeur de luminance moyenne de ladite zone d'artéfacts de bruit d'obscurité candidate ; et calcul (18) d'une métrique de puissance des artéfacts de bruit d'obscurité basée sur une pluralité desdits paramètres d'artéfact de bruit d'obscurité à partir d'une pluralité desdites zones d'artéfacts de bruit d'obscurité candidates.

2. Procédé selon la revendication 1, dans lequel ladite attribution d'un paramètre d'artéfact de bruit d'obscurité est effectuée au niveau des macroblocs.

3. Procédé selon la revendication 1, dans lequel ladite attribution d'un paramètre d'artéfact de bruit d'obscurité est effectuée au niveau des images.

4. Procédé selon la revendication 1, dans lequel le paramètre d'artéfact de bruit d'obscurité varie en fonction de la différence entre la variance de luminance de l'image originale correspondant à ladite image numérique avant compression et la variance de luminance de l'image numérique dans laquelle des artéfacts de compression sont détectés.

5. Procédé selon la revendication 1, dans lequel le paramètre d'artéfact de bruit d'obscurité est comparé à un seuil et ladite zone de bruit d'obscurité candidate est recodée en réponse audit paramètre d'artéfact de bruit d'obscurité dépassant ledit seuil.

6. Procédé selon la revendication 1, dans lequel ledit paramètre d'artéfact de bruit d'obscurité est fourni sous la forme d'une sortie système.

7. Codeur vidéo comprenant:

un détecteur (10) pour détecter les artéfacts de compression dans une image numérique, ledit détecteur étant configuré pour analyser (12) ladite image numérique afin de détecter au moins une zone d'artéfacts de bruit d'obscurité candidate, dans lequel chaque zone est détectée lorsque les conditions suivantes sont satisfaites :

la luminance moyenne de ladite zone se trouve dans une première plage prédéterminée,
la variance de luminance de ladite zone est inférieure à une valeur prédéterminée, et les moyennes respectives des composantes de chrominance de ladite zone se trouvent dans des plages prédéterminées respectives ; et pour
filtrer (14) afin d'éliminer toutes les zones d'artéfacts de bruit d'obscurité candidates isolées dans l'image numérique, attribuer (16) un paramètre d'artéfact de bruit d'obscurité à chaque zone d'artéfacts de bruit d'obscurité candidate pour représenter la gravité des artéfacts de bruit d'obscurité dans ladite zone, dans lequel ledit paramètre d'artéfact de bruit d'obscurité est déterminé à partir de la valeur de luminance moyenne de ladite zone d'artéfacts de bruit d'obscurité candidate, et calculer (18) une métrique de puissance des artéfacts de bruit d'obscurité basée sur une pluralité desdits paramètres d'artéfacts de bruit d'obscurité à partir d'une pluralité desdites zones d'artéfacts de bruit d'obscurité candidates.

8. Codeur vidéo selon la revendication 7, dans lequel le codeur attribue le paramètre d'artéfact de bruit d'obscurité en fonction de la différence entre une variance de luminance de l'image originale correspondant à ladite image numérique avant compression et la variance de luminance de l'image numérique dans laquelle ledit artéfact de compression est détecté.

9. Codeur vidéo selon la revendication 7, dans lequel le détecteur attribue le paramètre d'artéfact de bruit d'obscurité au niveau des macroblocs.

10. Codeur vidéo selon la revendication 7, dans lequel le détecteur attribue le paramètre d'artéfact de bruit d'obscurité au niveau des images.

11. Codeur vidéo selon la revendication 7, dans lequel le paramètre d'artéfact de bruit d'obscurité est comparé à un seuil et ladite zone d'artéfacts de bruit d'obscurité candidate est recodée en réponse audit paramètre d'artéfact de bruit d'obscurité dépassant ledit seuil.

12. Codeur vidéo selon la revendication 7, dans lequel ledit paramètre d'artéfact de bruit d'obscurité est fourni sous la forme d'une sortie système.

10

PRE-SCREEN CANDIDATE DARK NOISE ARTIFACT AREAS BASED ON FEATURES OF THE AREA — 12

FILTERING THE CANDIDATE DARK NOISE AREAS TO ELIMINATE ISOLATED ARTIFACT AREAS — 14

ASSIGN DARK NOISE ARTIFACT STRENGTH TO CANDIDATE AREA — 16

COMPUTE (FORM) DARK NOISE ARTIFACT STRENGTH FOR A SET OF PIXELS — 18

## FIG. 1

### 300

RATE CONSTRAINTS — 320

DARK NOISE ARTIFACT DETECTION — 310

RATE CONTROL — 330

VIDEO INPUT

VIDEO ENCODER — 340

OUTPUT BITSTREAM

## FIG. 3

ORIGINAL    RECONSTRUCTED
PICTURE       PICTURE

95

BEGIN — 100

LOOP i = 1, ..., # OF
MACROBLOCKS — 110

CALCULATE FEATURES OF THE ORIGINAL
AND RECONSTRUCTED BLOCK — 120

DOES
DARK NOISE EXIST
IN BLOCK
? — 130

140

MARK THIS BLOCK AS 1 IN
THE DARK NOISE MAP

150

MARK THIS BLOCK AS 0 IN
THE DARK NOISE MAP

END LOOP — 160

PERFORM MEDIAN FILTERING ON
THE ARTIFACT MAP — 170

CALCULATE STRENGTH OF THE
ARTIFACT IN EACH BLOCK — 180

FORM A PICTURE LEVEL DARK NOISE
ARTIFACT STRENGTH METRIC — 190

END — 200

*FIG. 2*

FIG. 4

EP 2 321 796 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008088482 A